(19) Europäisches Patentamt
European Patent Office
Office européen des brevets

(11) **EP 1 720 933 B1**

(12) **EUROPÄISCHE PATENTSCHRIFT**

(45) Veröffentlichungstag und Bekanntmachung des Hinweises auf die Patenterteilung:
**22.08.2007  Patentblatt 2007/34**

(21) Anmeldenummer: **05715388.4**

(22) Anmeldetag: **18.02.2005**

(51) Int Cl.:
***C08J 3/12*** *(2006.01)*

(86) Internationale Anmeldenummer:
**PCT/EP2005/001675**

(87) Internationale Veröffentlichungsnummer:
**WO 2005/080478 (01.09.2005 Gazette 2005/35)**

(54) **VERFAHREN ZUR HERSTELLUNG VON GUT IN WASSER REDISPERGIERBAREN POLYMERISATPULVERN**

METHOD FOR PRODUCING POLYMER POWDERS THAT CAN BE EASILY REDISPERSED IN WATER

PROCEDE SERVANT A FABRIQUER UNE POUDRE POLYMERE CAPABLE DE REDISPERSION DANS L'EAU

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **25.02.2004  DE 102004009739**

(43) Veröffentlichungstag der Anmeldung:
**15.11.2006  Patentblatt 2006/46**

(73) Patentinhaber: **BASF Aktiengesellschaft 67056 Ludwigshafen (DE)**

(72) Erfinder:
• **PIETSCH, Ines 67346 Speyer (DE)**
• **PAKUSCH, Joachim 67346 Speyer (DE)**
• **REESE, Oliver 67061 Ludwigshafen am Rhein (DE)**
• **SACK, Heinrich 67454 Hassloch (DE)**

(56) Entgegenhaltungen:
**EP-A- 0 520 182          EP-A- 1 184 406 DE-A1- 10 140 551**

EP 1 720 933 B1

**Beschreibung**

Die vorliegende Erfindung betrifft ein Verfahren zur Herstellung eines gut in Wasser redispergierbaren Polymerisatpulvers durch Sprühtrocknung einer wässrigen Polymerisatdispersion, welches dadurch gekennzeichnet ist, dass die Sprühtrocknung der wässrigen Polymerisatdispersion in Anwesenheit eines Sprühhilfsmittels A erfolgt, welches durch Umsetzung eines Dihydroxydiphenylsulfons mit 0,5 bis 5 Mol eines aliphatischen Aldehyds mit 1 bis 6 C-Atomen und 0,4 bis 2 Mol Natriumsulfit pro Mol Dihydroxydiphenylsulfon bei einer Temperatur von 90 bis 180 °C erhalten wurde.

Weiterhin betrifft die Erfindung Polymerisatpulver, welche nach dem erfindungsgemäßen Verfahren hergestellt wurden sowie deren Verwendung.

In vielen Anwendungsbereichen werden Polymerisate benötigt, welche sich in einfacher Weise in ein wässriges Medium einarbeiten lassen. Hierzu eignen sich in vielen Fällen wässrige Dispersionen von Polymerisatpartikeln (wässrige Polymerisatdispersionen), welche sich häufig direkt einsetzen lassen. Nachteilig an wässrigen Polymerisatdispersionen ist jedoch, dass sie mit einem Wassergehalt von bis zu 60 Gew.-% bei der Lagerung große Volumina benötigen und bei der Abgabe an den Kunden neben dem gewünschten Polymerisat auch überall günstig verfügbares Wasser kostenaufwendig transportiert werden muss.

Dieses Problem wird häufig dadurch gelöst, dass man die wässrigen Polymerisatdispersionen, welche u.a. durch eine dem Fachmann geläufige radikalisch initiierte wässrige Emulsionspolymerisation zugänglich sind, einem dem Fachmann ebenfalls geläufigen Sprühtrocknungsprozess zur Herstellung entsprechender Polymerisatpulver unterwirft.

Bei der Verwendung dieser Polymerisatpulver, beispielsweise als Bindemittel in Klebstoffen, Dichtmassen, Kunstharzputzen, Papierstreichmassen, Anstrichmitteln sowie sonstigen Beschichtungsmitteln oder als Additive in mineralischen Bindemitteln, müssen die Polymerisatpulver in der Regel wieder in Wasser redispergiert werden. Dies kann entweder dadurch geschehen, dass das Polymerisatpulver in Wasser redispergiert wird und die erhaltene wässrige Polymerisatdispersion zur Mischung mit den anderen Formulierungsbestandteilen verwendet wird oder dadurch, dass das Polymerisatpulver gemeinsam mit den anderen Formulierungsbestandteilen mit Wasser gemischt wird. Dabei kommt es in beiden Fällen darauf an, dass das Polymerisatpulver beim Inkontaktbringen mit Wasser rasch und ohne Ausbildung von Agglomeraten wieder die ursprünglichen Polymerisatpartikel ausbildet. Die Grundlage hierfür ist das sogenannte "instant"-Verhalten des eingesetzten Polymerisatpulvers in Wasser, welches sich aus dem Redispergier- und dem Benetzungsverhalten des Polymerisatpulvers zusammensetzt.

Das Redispergierverhalten ist eine wichtige Eigenschaft für die Güte des Polymerisatpulvers. Je besser das Redispergierverhalten eines Polymerisatpulvers in Wasser ist, um so mehr nähern sich die Eigenschaften der wässrigen Polymerisatdispersion nach der Redispergierung den Eigenschaften der wässrigen Polymerisatdispersion vor dem Sprühtrocknungsschritt an. Mit anderen Worten, das Redispergierverhalten des Polymerisatpulvers ist ein Maß dafür, in welchem Ausmaß die ursprüngliche und die redispergierte wässrige Polymerisatdispersion in ihren Eigenschaften übereinstimmen.

Weist das Polymerisatpulver darüber hinaus auch noch ein gutes Benetzungsverhalten auf, so kann bei der Redispergierung die Ausbildung der wässrigen Polymerisatdispersion auch ohne den Einsatz einer intensiven Mischtechnik erfolgen, was in der Praxis Vorteile bietet.

Während das Redispergierverhalten eines Polymerisatpulvers in der Regel im wesentlichen von den beim Sprühtrocknungsprozess eingesetzten Sprühhilfsmitteln beeinflusst wird, wird das Benetzungsverhalten durch die Oberflächenbeschaffenheit des Polymerisatpulverkorns bestimmt. Diese wird häufig durch das auf der Oberfläche des Polymerisatpulverkorns anhaftende, sogenannte Antiblockmittel bestimmt.

Dem Fachmann sind bei der Sprühtrocknung wässriger Polymerisatdispersionen eine Vielzahl von Sprühhilfsmitteln geläufig. Beispiele hierfür finden sich in DE-A 19629525, DE-A 19629526, DE-A 2214410, DE-A 2445813, EP-A 407889 oder EP-A 784449.

Aus Kostengründen finden häufig Sprühhilfsmittel Verwendung, welche auf Basis günstig verfügbarer Rohstoffe hergestellt werden. Beispiele hierfür sind sulfonierte Phenol-oder Naphthalinformaldehydharze, wie sie u.a. in den Schriften DE-A 19629525 oder DE-A 19629526 offenbart werden. Nachteilig an diesen sulfonierten Phenol- oder Naphthalinformaldehydharzen ist allerdings, dass sie zu einer intensiven Gelb- oder sogar Braunfärbung der mit ihnen sprühgetrockneten Polymerisatpulvern führen können. Diese Verfärbungen stören auch bei den mit diesen Polymerisatpulvern hergestellten Formulierungen, insbesondere Beschichtungsformulierungen im Außenbereich, was sich durch Verfärbungen der Formulierungen selbst bemerkbar macht, welche sich insbesondere durch Sonneneinstrahlung noch verstärken können. In vielen Polymerisatpulveranwendungen, beispielsweise bei deren Verwendung als Binde- oder Modifizierungsmittel in mineralischen Putzen oder bei Auskleidungen von Trinkwasserbehältern, ist eine Verfärbung der Polymerisatpulver bzw, deren Formulierungen nicht erwünscht.

Der vorliegenden Erfindung lag die Aufgabe zugrunde, ein verbessertes Verfahren zur Herstellung von Polymerisatpulvem durch Sprühtrocknung von wässrigen Polymerisatdispersionen zur Verfügung zu stellen.

Überraschenderweise wurde nun gefunden, dass die Aufgabe durch das eingangs definierte Verfahren gelöst wird.

Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatpartikel, in disperser Verteilung befindlich enthalten. Der gewichtsmittleren Durchmesser der Polymerisatpartikel liegt häufig im Bereich von 10 bis 1000 nm, oft 50 bis 500 nm oder 100 bis 400 nm.

Wässrige Polymerisatdispersionen sind insbesondere durch radikalisch initiierte wässrige Emulsionspolymerisation von ethylenisch ungesättigten Monomeren zugänglich. Diese Methode ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise dergestalt, dass man die ethylenisch ungesättigten Monomeren, häufig unter Mitverwendung von Dispergierhilfsmitteln, in wässrigem Medium dispers verteilt und mittels wenigstens eines radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide oder schaumdämpfende Additive zugesetzt. Häufig betragen die Polymerisatfeststoffgehalte der wässrigen Polymerisatdispersionen 30 bis 80 Gew.-%, 40 bis 70 Gew.-% oder 45 bis 65 Gew.-%.

Das erfindungsgemäße Verfahren lässt sich insbesondere mit wässrigen Polymerisatdispersionen durchführen, deren Polymerisatpartikel

| | |
|---|---|
| 50 bis 99,9 Gew.-% | Ester der Acryl- und/oder Methacrylsäure mit 1 bis 12 C-Atome aufweisenden Alkanolen und/oder Styrol, oder |
| 50 bis 99,9 Gew.-% | Styrol und/oder Butadien, oder |
| 50 bis 99,9 Gew.-% | Vinylchlorid und/oder Vinylidenchlorid, oder |
| 40 bis 99,9 Gew.-% | Vinylacetat, Vinylpropionat, Vinylester der Versaticsäure, Vinyl-ester langkettiger Fettsäuren und/oder Ethylen |

in einpolymerisierter Form enthalten.

Insbesondere sind erfindungsgemäß solche wässrigen Polymerisatdispersionen einsetzbar, deren Polymerisate zu

| | |
|---|---|
| - 0,1 bis 5 Gew.-% | wenigstens eine 3 bis 6 C-Atome aufweisende $\alpha,\beta$-monoethylenisch ungesättigte Mono- und/oder Dicarbonsäure und/oder deren Amid und |
| 50 bis 99,9 Gew.-% | wenigstens einen Ester der Acryl- und/oder Methacrylsäure mit 1 bis 12 C-Atome aufweisenden Alkanolen und/oder Styrol, oder |
| - 0,1 bis 5 Gew.-% | wenigstens eine 3 bis 6 C-Atome aufweisende $\alpha,\beta$-monoethylenisch ungesättigte Mono- und/oder Dicarbonsäure und/oder deren Amid und |
| 50 bis 99,9 Gew.-% | Styrol und/oder Butadien, oder |
| - 0,1 bis 5 Gew.-% | wenigstens eine 3 bis 6 C-Atome aufweisende $\alpha,\beta$-monoethylenisch ungesättigte Mono- und/oder Dicarbonsäure und/oder deren Amid und |
| 50 bis 99,9 Gew.-% | Vinylchlorid und/oder Vinylidenchlorid, oder |
| - 0,1 bis 5 Gew.- % | wenigstens eine 3 bis 6 C-Atome aufweisende $\alpha,\beta$-monoethylenisch ungesättigte Mono- und/oder Dicarbonsäure und/oder deren Amid und |
| 40 bis 99,9 Gew.-% | Vinylacetat, Vinylpropionat, Vinylester der Versaticsäure, Vinylester langkettiger Fettsäuren und/oder Ethylen |

in einpolymerisierter Form enthalten.

Erfindungsgemäß können solche Polymerisate eingesetzt werden, deren Glasübergangstemperatur -60 bis +150 °C, oft -30 bis +100 °C und häufig -20 bis +50 °C beträgt. Mit der Glasübergangstemperatur ($T_g$) ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... \; x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1,2, ... n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Das Sprühhilfsmittel A wird hergestellt, indem man Dihydroxydiphenylsulfon mit 0,5 bis 5 Mol eines aliphatischen Aldehyds mit 1 bis 6 C-Atomen und 0,4 bis 2 Mol Natriumsulfit pro Mol Dihydroxydiphenylsulfon bei einer Temperatur von 90 bis 180 °C umsetzt. Die Synthese des als erfindungsgemäß eingesetzten Sprühhilfsmittels A verwendeten Dihydroxydiphenylsulfon-Umsetzungsproduktes ist in der deutschen Offenlegungsschrift DE-OS 10140551 - auf die im Rahmen der vorliegenden Schrift ausdrücklich bezug genommen werden soll - ausführlich als Komponente B eines sulfonhaltigen Gerbstoffes beschrieben.

Bei der Herstellung des Sprühhilfsmittels A wird in einem Schritt Dihydroxydiphenylsulfon mit 0,5 bis 5 Mol, bevorzugt 1 bis 1,4 Mol, besonders bevorzugt 1,1 bis 1,3 Mol und insbesondere ca. 1,2 Mol eines aliphatischen Aldehyds, pro Mol Dihydroxydiphenylsulfon und 0,4 bis 2 Mol, bevorzugt 0,5 bis 0,8 Mol, insbesondere 0,6 bis 0,7 Mol Natriumsulfit pro Mol Dihydroxydiphenylsulfon bei einer Temperatur von 90 bis 180 °C umgesetzt. Die Reaktion wird üblicherweise in wässriger Lösung unter Druck durchgeführt. Dabei werden beispielsweise Dihydroxydiphenylsulfon und Aldehyd in Form ihrer wässrigen Lösungen sowie festes Natriumsulfit in einen Druckreaktor gegeben und die Mischung auf 115 °C erwärmt. Nach Anspringen der Reaktion steigt die Temperatur auf ca. 150 bis 160 °C und der Druck auf ca. 4 bis 5 bar. Im allgemeinen dauert die Umsetzung 2 bis 10 Stunden.

Unter Dihydroxydiphenylsulfon werden im Sinne dieser Erfindung alle denkbar möglichen isomeren Dihydroxyverbindungen des Diphenylsulfons verstanden, wobei die beiden Hydroxygruppen an einem Phenylrest gebunden sein können. Es ist jedoch auch möglich, dass pro Phenylrest je eine Hydroxygruppe gebunden ist. Bevorzugt enthält jeder Phenylrest eine Hydroxygruppe. Die Hydroxygruppen können sowohl in der 2-, 3- oder 4-Positon des einen Phenylrestes sowie in der 2'-, 3'- oder 4'-Position des anderen Phenylrestes gebunden sein. Besonders günstig ist es, wenn die Hydroxygruppen in 2- und 4'-Position oder in 4- und 4'-Position des Diphenylsulfons gebunden sind. Bevorzugt ist das 4,4'-Isomere. Auch ist es möglich, dass Dihydroxydiphenylsulfongemische eingesetzt werden. Häufig wird ein technisches 4,4'-Dihydroxydiphenylsulfongemisch eingesetzt, welches neben 4,4'-Dihydroxydiphenylsulfon als Hauptkomponente noch ca. 10 - 15 Gew.-% des 2,4'-Isomeren sowie 0 bis 5 Gew.-% p-Phenolsulfonsäure als Nebenkomponenten enthält.

Die bei der Herstellung des Sprühhilfsmittels A eingesetzten aliphatischen Aldehyde weisen im allgemeinen 1 bis 6, bevorzugt 1 bis 4 und besonders bevorzugt 1 oder 2 C-Atome auf. Insbesondere wird als aliphatischer Aldehyd Formaldehyd, üblicherweise in Form einer wässrigen Lösung, beispielsweise in Form einer 30 gew.-%igen wässrigen Lösung, eingesetzt. Es können beispielsweise aber auch Acetaldehyd, Propionaldehyd, Butyraldehyd oder Isobutyraldehyd, Pentanal, Hexanal oder deren isomeren Aldehydverbindungen sowie entsprechende Aldehydgemische eingesetzt werden.

Günstig ist es, wenn die aus der Synthese erhaltene wässrige Lösung des Sprühhilfsmittels A auf einen pH-Wert $\geq$ 7 eingestellt wird. Günstig ist ein pH-Wert $\leq$ 10. Häufig wird ein pH-Wert von ca. 8 eingestellt. Zur pH-Werteinstellung können dem Fachmann geläufige organische oder anorganische Säuren oder Basen verwendet werden.

Das erfindungsgemäße Sprühhilfsmittel A kann direkt in Form seiner aus der Synthese resultierenden wässrigen Lösung eingesetzt werden. Es ist aber auch möglich, das Sprühhilfsmittel A in Form von Pulvern zu verwenden, welche durch Trocknung der aus der Synthese des Sprühhilfsmittels A resultierenden wässrigen Lösung, beispielsweise durch Sprühtrocknung, erhalten werden. Bevorzugt wird das Sprühhilfsmittel in Form seiner wässrigen Lösung eingesetzt.

Von Bedeutung ist, dass das Sprühhilfsmittel A (sowohl in Form seiner wässrigen Lösung als auch in Form eines Feststoffs) im Gemisch mit wenigstens einem anderen, vom Sprühhilfsmittel A verschiedenen Sprühhilfsmittel B (ebenfalls in Form der wässrigen Lösung oder als Feststoff) eingesetzt werden kann. Vorteilhaft besteht die Gesamtmenge des Sprühhilfsmittels zu ≥50 Gew.-%, ≥60 Gew.-%, ≥70 Gew.-%, ≥80 Gew.-% oder ≥90 Gew.-% und häufig sogar zu 100 Gew.-% aus Sprühhilfsmittel A.

Als Sprühhilfsmittel B können beispielsweise die im nachfolgend genannten Stand der Technik offenbarten Sprühhilfsmittel, auch Trocknungshilfsmittel genannt, eingesetzt werden. So empfiehlt die DE-A 2049114, wässrigen Polymerisatdispersionen als Sprühhilfsmittel Kondensationsprodukte aus Melaminsulfonsäure und Formaldehyd zuzusetzen. Die DE-A 2445813 und die EP-A 78449 empfehlen wässrigen Polymerisatdisperionen als Trocknungshilfsmittel Kondensationsprodukte aus Naphthalinsulfonsäure und Formaldehyd (insbesondere deren wasserlösliche Alkali- und/ oder Erdalkalisalze) zuzusetzen. Die EP-A 407889 empfiehlt, wässrigen Polymerisatdispersionen als Trocknungshilfsmittel Kondensationsprodukte aus Phenolsulfonsäure und Formaldehyd (insbesondere deren wasserlösliche Alkali- und/ oder Erdalkalisalze) zuzusetzen. Die DE-AS 2238903 und die EP-A 576844 empfehlen die Verwendung von Poly-N-Vinylpyrrolidon als ein solches Sprühhilfsmittel. Die EP-A 62106 und die EP-A 601518 empfehlen die Verwendung von Polyvinylalkohol als Trocknungshilfsmittel. Polyvinylalkohol wird auch von U. Rietz in Chemie und Technologie makromolekularer Stoffe (FH-Texte FH Aachen) 53 (1987) 85 und in der EP-A 680 993 sowie in der EP-A 627450 als Trocknungshilfsmittel empfohlen. In der DE-A 3344242 werden als Trocknungshilfsmittel Ligninsulfonate genannt. Die DE-A 19539460, die EP-A 671435 und die EP-A 629650 offenbaren Homo- und Copolymerisate der 2-Acrylamido-2-methylpropansulfonsäure als geeignete Trocknungshilfsmittel für wässrige Polymerisatdispersionen. Die EP-A 467103 betrifft die Herstellung von in wässrigem Medium redispergierbaren Polymerisatpulvern durch Trocknung unter Zusatz von Copolymerisaten aus 50 bis 80 Mol-% einer olefinisch ungesättigten Mono- und/oder Dicarbonsäure und 20 bis 50 Mol-% eines C3- bis C12-Alkens und/oder Styrol als Trocknungshilfsmittel. Die DE-A 2445813 empfiehlt sulfongruppenhaltige Kondensationsprodukte aus ein- oder mehrkernigen aromatischen Kohlenwasserstoffen und Formaldehyd als Trocknungshilfsmittel. In der DE-A 4406822 werden Pfropfpolymere aus Polyalkylenoxiden und ungesättigten Mono-/Dicarbonsäuren bzw. deren Anhydriden nach erfolgter Derivatisierung mit primären/sekundären Aminen oder Alkoholen als Trocknungshilfsmittel empfohlen. Die DE-A 3344242 und die EP-A 536597 nennen Stärke und Stärkederivate als geeignete Trocknungshilfsmittel. In der DE-A 493168 werden Organopolysiloxane als Trocknungshilfsmittel empfohlen. Die DE-A 3342242 nennt des weiteren Cellulosederivate als geeignete Trocknungshilfsmittel und die DE-A 4118007 empfiehlt Kondensationsprodukte aus sulfonierten Phenolen, Harnstoff, weiteren organischen Stickstoff-Basen und Formaldehyd als Trocknungshilfsmittel.

Die Gesamtmenge an Sprühhilfsmittel A (gerechnet als Feststoff), welches der wässrigen Polymerisatdispersion vor oder während, insbesondere jedoch vor der Sprühtrocknung zugegeben wird, beträgt 0,1 bis 40 Gew.-Teile, häufig 1 bis 25 Gew.-Teile und oft 5 bis 25 Gew.-Teile, jeweils bezogen auf 100 Gew.-Teile des in wässriger Dispersion enthaltenem sprühzutrocknendem Polymerisats.

Gemäß TIZ-Fachberichte, Vol. 109, No. 9, 1985, S. 698 ff. handelt es sich bei den üblicherweise eingesetzten Sprühhilfsmitteln in der Regel um wasserlösliche Substanzen, die bei der Sprühtrocknung der wässrigen Polymerisatdispersion zum Polymerisatpulver eine Matrix ausbilden, in die die wasserunlöslichen, von Dispergiermittel umgebenen Polymerisatprimärteilchen eingebettet werden. Die die Polymerisatprimärteilchen schützend umgebende Matrix wirkt einer irreversiblen Sekundärteilchenbildung entgegen. Es erfolgt so meist eine reversible Ausbildung von Sekundärteilchen (Agglomerate einer Größe von typisch 1 bis 250 $\mu$m), die zahlreiche, durch die Sprühhilfsmittelmatrix voneinander getrennte, Polymerisatprimärteilchen umfassen. Beim Redispergieren der erfindungsgemäß erhaltenen Polymerisatpulver mit Wasser löst sich die Matrix wieder auf und die ursprünglichen, von Dispergiermittel umgebenen, Polymerisatprimärteilchen werden im wesentlichen wieder erhalten. Den in Form von Polymerisatpulver reversibel ausgebildeten Sekundärteilchen werden vielfach noch feinteilige Antiblockmittel zugesetzt, die als Abstandhalter fungieren und z.B. ihrem Zusammenbacken beim Lagern des Polymerisatpulvers unter der Druckwirkung des Eigengewichtes entgegenwirken, wobei dieser Antiblockmittelzusatz vor, während und/oder nach der Sprühtrocknung erfolgen kann.

Bei den Antiblockmitteln handelt es sich in der Regel um Pulver anorganischer Feststoffe, mit einer mittleren Teilchengröße von 0,1 bis 20 $\mu$m und häufig von 1 bis 10 $\mu$m (in Anlehnung an ASTM C 690-1992, Multisizer/100 $\mu$m Kapillare). Günstig ist es, wenn die anorganischen Stoffe in Wasser bei 20 °C eine Löslichkeit ≤ 50 g/l, ≤ 10 g/l oder ≤ 5 g/l aufweisen.

Beispielhaft genannt seien Kieselsäuren, Aluminiumsilikate, Carbonate, wie beispielsweise Calciumcarbonat, Magnesiumcarbonat oder Dolomit, Sulfate, wie beispielsweise Bariumsulfat sowie Talke, Leichtspat, Zemente, Dolomit, Calciumsilikate oder Diatomeenerde. In Frage kommen auch Mischungen vorgenannter Verbindungen, wie beispielsweise Mikroverwachsungen aus Silikaten und Carbonaten.

Abhängig von ihrer Oberflächenbeschaffenheit können die Antiblockmittel hydrophobe (wasserabstoßende) oder hydrophile (wasseranziehende) Eigenschaften aufweisen. Ein Maß für die Hydrophobie bzw. Hydrophilie eines Stoffes ist der Kontaktwinkel eines Tropfens entionisierten Wassers auf einem Presskörper des entsprechenden Antiblockmittels. Dabei ist die Hydrophobie umso größer bzw. die Hydrophilie um so kleiner, je größer der Kontaktwinkel des Wassertropfens auf der Oberfläche des Presskörpers ist und umgekehrt. Zur Entscheidung, ob ein Antiblockmittel hydrophober bzw. hydrophiler ist als ein anderes, werden von beiden Antiblockmitteln einheitliche Siebfraktionen (= gleiche Teilchengrößen oder Teilchengrößenverteilungen) hergestellt. Aus diesen Siebfraktionen gleicher Größen oder Größenverteilungen werden unter identischen Bedingungen (Menge, Fläche, Pressdruck, Temperatur) Presskörper mit waagrechten Oberflächen hergestellt. Mit einer Pipette wird auf jeden Presskörper ein Wassertropfen aufgetragen und unmittelbar danach der Kontaktwinkel zwischen Presskörperoberfläche und Wassertropfen bestimmt. Je größer der Kontaktwinkel zwischen Presskörperoberfläche und Wassertropfen ist, je größer ist die Hydrophobie bzw. desto kleiner ist die Hydrophilie. Häufig werden sowohl hydrophobe wie auch hydrophile Antiblockmittel eingesetzt. Dabei kann es von Vorteil sein, wenn die Sprühtrocknung der wässrigen Polymerisatdispersion in Anwesenheit eines hydrophoben Antiblockmittels erfolgt und das dabei erhaltene Polymerisatpulver in einem nachfolgenden Schritt homogen mit einem hydrophilen Antiblockmittel gemischt wird.

Im Rahmen dieser Schrift werden als hydrophile Antiblockmittel alle diejenigen Antiblockmittel verstanden, die hydrophiler sind als die verwendeten hydrophoben Antiblockmittel, d.h. deren Kontaktwinkel kleiner sind als die der beim Sprühprozess eingesetzten hydrophoben Antiblockmittel.

Häufig weisen die hydrophoben Antiblockmittel einen Kontaktwinkel $\geq 90°$, $\geq 100°$ oder $\geq 110°$ auf, während die hydrophilen Antiblockmittel einen Kontaktwinkel $< 90°$, $\leq 80°$ oder $\leq 70°$ aufweisen. Günstig ist es, wenn sich die Kontaktwinkel der eingesetzten hydrophoben und hydrophilen Antiblockmittel um $\geq 10°$, $\geq 20°$, $\geq 30°$, $\geq 40°$, $\geq 50°$, $\geq 60°$, $\geq 70°$, $\geq 80°$ oder $\geq 90°$ unterscheiden.

Als hydrophile Antiblockmittel werden beispielsweise Kieselsäuren, Quarz, Dolomit, Calciumcarbonat, Natrium/ Aluminiumsilikate, Calciumsilikate oder Mikroverwachsungen aus Silikaten und Carbonaten und als hydrophobe Antiblockmittel beispielsweise Talk (Magensiumhydrosilikat mit Schichtstruktur), Chlorit (Magnesium/ Aluminium/Eisenhydrosilikat), mit Organochlorsilanen behandelte Kieselsäuren (DE-A 3101413) oder allgemein hydrophile Antiblockmittel, welche mit hydrophoben Verbindungen beschichtet sind, wie beispielsweise gefälltes Calciumcarbonat beschichtet mit Calciumstearat, verwendet.

Günstig ist es, wenn pro 100 Gew.-Teilen des in der wässrigen Polymerisatdispersion enthaltenen Polymerisats 0,001 bis 10 Gew.-Teile, sowie oft 0,1 bis 1 Gew.-Teile eines hydrophoben Antiblockmittel und 0,01 bis 30 Gew.-Teile sowie oft 1 bis 10 Gew.-Teile hydrophiles Antiblockmittel eingesetzt werden. Von besonderem Vorteil ist es, wenn das Mengenverhältnis des hydrophoben Antiblockmittels zum hydrophilen Antiblockmittels 0,001 bis 0,25 : 1 oder 0,004 bis 0,08 : 1 beträgt.

Optimale Ergebnisse werden erhalten, wenn wässrige Polymerisatdispersionen mit einer gewichtsmittleren Teilchengröße von 100 bis 1000 nm, oft von 100 bis 500 nm ($d_{50}$-Werte, ermittelt mit einer analytischen Ultrazentrifuge) eingesetzt werden und das Verhältnis des mittleren Sekundärteilchendurchmessers (mittlerer Polymerisatpulverdurchmesser; nach der Sprühtrocknung häufig 30 bis 150 $\mu$m, oft 50 bis 100 $\mu$m; bestimmt in Anlehnung an ASTM C 690-1992, Multisizer/100 $\mu$m Kapillare) zum mittleren Teilchendurchmesser der hydrophoben sowie hydrophilen Antiblockmittel 2 bis 50 : 1 oder 5 bis 30 : 1 beträgt.

Die dem Fachmann bekannte Sprühtrocknung erfolgt in einem Trocknungsturm mit Hilfe von Zerstäubungsscheiben oder Ein- oder Zweistoffdüsen im Kopf des Turms. Die Trocknung der wässrigen Polymerisatdispersion unter vorherigem Zusatz des Sprühhilfsmittels A und optional wenigstens eines weiteren Sprühhilfsmittels B wird mit einem heißen Gas, beispielsweise Stickstoff oder Luft, durchgeführt, das von unten oder oben, bevorzugt jedoch im Gleichstrom mit dem Trocknungsgut von oben in den Turm geblasen wird. Die Temperatur des Trocknungsgases beträgt am Turmeingang etwa 90 bis 180 °C, vorzugsweise 110 bis 160 °C und am Turmausgang etwa 50 bis 90 °C, bevorzugt 60 bis 80 °C. Das hydrophobe Antiblockmittel wird häufig gleichzeitig mit der wässrigen Polymerisatdispersion, aber räumlich davon getrennt in den Trocknungsturm eingegeben. Die Zugabe erfolgt beispielsweise über eine Zweistoffdüse oder Förderschnecke, im Gemisch mit dem Trocknungsgas oder über eine separate Öffnung.

Das aus dem Trocknungsturm ausgeschleuste Polymerisatpulver wird auf 20 bis 30 °C abgekühlt und häufig in handelsüblichen Mischern, wie beispielsweise einem Nautamischer, wie er von zahlreichen Firmen angeboten wird, mit einem hydrophilen Antiblockmittel abgemischt.

Die erfindungsgemäß zugänglichen Polymerisatpulver lassen sich insbesondere als als Bindemittel in Klebstoffen, Dichtmassen, Kunstharzputzen, Papierstreichmassen, Anstrichmitteln sowie sonstigen Beschichtungsmitteln oder als Additiv in mineralischen Bindemitteln einsetzen.

Auch lassen sich die erfindungsgemäß erhaltenen Polymerisatpulver in einfacher Weise wieder in Wasser redispergieren, wobei die Polymerisatprimärteilchen im wesentlichen wieder erhalten werden.

Die erfindungsgemäß erhaltenen Polymerisatpulver zeigen eine sehr gute Lagerstabilität und Rieselfähigkeit. Sie sind staubarm und lassen sich in einfacher Weise ohne hohen Mischaufwand in Wasser redispergieren. Die erhaltenen Polymerisatpulver eignen sich insbesondere zum Einsatz als Bindemittel in Klebstoffen, Dichtmassen, Kunstharzputzen, Papierstreichmassen, Anstrichmittel sowie sonstigen Beschichtungsmitteln oder als Additive in mineralischen Bindemitteln. Von Bedeutung ist ferner, dass die erhaltenen Polymerisatpulver praktisch ungefärbt sind und auch bei deren Einsatz als Bindemittel oder als Additive keine ungewünschte Verfärbungen auftreten.

Beispiele

1. Herstellung einer wässrigen Polymerisatdispersion

1.1 Polymerisatdispersion D1

In einem Polymerisationsreaktor wurden

397,2 g     einer Polystyrolsaatdispersion mit einem Polymerisatfeststoffgehalt von 0,18 Gew.-% und einem gewichtsmittleren Teilchendurchmesser von 30 nm ($d_{50}$-Wert, bestimmt mittels analytischer Ultrazentrifuge)

unter Rühren und Stickstoffatmosphäre auf 90 °C erhitzt. Anschließend wurden zu diesem Gemisch zeitgleich beginnend und unter Aufrechterhaltung der Innentemperatur von 90 °C in 3 Stunden eine wässrige Monomeremulsion, bestehend aus

| | |
|---|---|
| 1044,0 g | n-Butylacrylat, |
| 362,5 g | Styrol, |
| 29,0 g | Acrylamid, |
| 14,5 g | Methacrylamid, |
| 246,5 g | einer 10 gew.-%igen wässrigen Lösung eines Alkylpolyethylenglykolethers auf Basis eines gesättigten C16-18-Fettalkohols (Ethylenoxid [EO]-Grad 18) [Emulgatorlösung 1], |
| 29,0 g | einer 15 gew.-%igen wässrigen Lösung eines Na-Salzes eines C10-16-Fettalkoholethersulfats (EO-Grad 30) [Emulgatorlösung 2] sowie |
| 359,9 | g entionisiertem Wasser |

und eine Lösung, bestehend aus 8,4 g Natriumperoxodisulfat und 112 g entionisiertem Wasser kontinuierlich zugegeben. Danach wurde das Reaktionsgemisch noch 30 Minuten bei 90 °C gerührt und danach auf 60 °C abgekühlt. Nach Zugabe einer Lösung von 2,9 g tert-Butylhydroperoxid in 26,1 g entionisiertem Wasser wurde bei dieser Temperatur innerhalb von 2 Stunden eine Lösung von 4,4 g Natriumhydroxymethansulfinat in 29 g entionisiertem Wasser zugegeben und anschließend weitere 30 Minuten gerührt. Danach kühlte man auf 20 bis 25 °C (Raumtemperatur) ab und stellte mit einer 20 gew.-%igen wässrigen Kalziumhydroxid-Aufschlämmung einen pH-Wert von 8 ein. Es wurde eine Polymerisatdispersion mit einem Feststoffgehalt von 54,9 Gew.-%, mit einer Lichtdurchlässigkeit einer 0,01 gew.-%igen Polymerisatdispersion bei 20 °C und einer Schichtdicke von 2,5 cm ("LD-Wert") von 31 % erhalten. Die Glasübergangstemperatur (DSC-midpoint) des Polymerisats betrug -15°C.

Die Feststoffgehalte wurden generell bestimmt, indem eine aliquote Menge der wässrigen Polymerisatdispersion oder der wässrigen Sprühhilfsmittellösung bei 140 °C in einem Trockenschrank bis zur Gewichtskonstanz getrocknet wurde. Es wurden jeweils zwei separate Messungen durchgeführt. Der in den jeweiligen Beispielen angegebene Wert stellt den Mittelwert der beiden Messergebnisse dar.

1.2 Polymerisatdispersion D2

Die Herstellung der wässrigen Polymerisatdispersion D2 erfolgte analog der Herstellung der wässrigen Polymerisatdispersion D1, mit der Ausnahme, dass folgende Monomerenemulsion verwendet wurde:

| | |
|---|---|
| 899,0 g | 2-Ethylhexylacrylat, |
| 507,5 g | Styrol, |
| 29,0 g | Acrylamid, |
| 14,5 g | Methacrylamid, |
| 246,5 g | Emulgatorlösung 1, |
| 29,0 g | Emulgatorlösung 2 und |
| 359,9 g | entionisiertem Wasser |

Es wurde eine Polymerisatdispersion mit einem Feststoffgehalt von 54,9 Gew.-%, mit einer Lichtdurchlässigkeit einer 0,01 gew.-%igen Polymerisatdispersion bei 20 °C und einer Schichtdicke von 2,5 cm ("LD-Wert") von 21 % erhalten.

Die Glasübergangstemperatur (DSC-midpoint) des Polymerisats betrug -15 °C. Anschließend wurden die beiden wässrigen Polymerisatdispersionen D1 und D2 mit entionisiertem Wasser auf einen Feststoffgehalt von 40 Gew.-% verdünnt.

2. Herstellung der Sprühhilfsmittel

2.1 Sprühhilfsmittel S1

Die Herstellung des Sprühhilfsmittels S1 erfolgte analog Beispiel 2 (Komponente B) der DE-OS 10140551.
In einem Druckreaktor wurden bei Raumtemperatur 1300 kg entionisiertes Wasser zusammen mit 4100 kg (9,5 kmol) technisches Dihydroxydiphenylsulfon (enthaltend ca. 85 Gew.-% 4,4'-Dihydroxydiphenylsulfon, ca. 15 Gew.-% 2,4'-Dihydroxydiphenylsulfon sowie geringe Mengen an p-Phenolsulfonsäure) als 60 Gew.-%ige wässrige Lösung vorgelegt und 1155 kg 30 Gew.-%ige wässrige Lösung von Formaldehyd (11,5 kmol) sowie 800 kg (3 kmol) festes Natriumsulfit (wasserfrei) zugefügt. Durch Zugabe von wenig 20 gew.-%iger wässriger Lösung von Natriumhydroxid stellte man im Reaktionsgemisch ein pH-Wert von 8 bis 8,5 ein. Anschließend wurde der Druckreaktor verschlossen und das Reaktionsgemisch unter Rühren auf 115 °C erhitzt. Nach kurzer Zeit bei dieser Temperatur sprang die Reaktion an. Dabei stieg die Temperatur des Reaktionsgemisches auf 150 bis 160 °C und der Druck im Druckreaktor auf 4 bis 5 bar (Überdruck) an. Durch Außenheizung wurde die Temperatur des Reaktionsgemisches auf 160 °C gehalten. Nach 3 Stunden Rühren des Reaktionsgemisches bei 160 °C kühlte man das Reaktionsgemisch auf Raumtemperatur ab und versetzte dieses mit 400 kg Natriumhydrogensulfat. Die erhaltene Lösung wies einen Feststoffgehalt von ca. 46 Gew.-% auf.

2.2 Vergleichssprühhilfsmittel SV2

Die Herstellung des Vergleichssprühhilfsmittels SV2 erfolgte analog Beispiel 1 der DE-A 19629525.
1,2 kg (9,4 Mol) Naphthalin wurden bei 85 °C in einem Reaktor vorgelegt und unter Rühren und Kühlen mit 1,18 kg (11,5 Mol) 98 gew.-%iger Schwefelsäure derart versetzt, dass die Temperatur des Reaktionsgemisches stets unter 150 °C lag. Nach beendeter Schwefelsäurezugabe ließ man das Reaktionsgemisch 5 Stunden bei 150 °C nachreagieren. Anschließend wurde das Reaktionsgemisch auf 50 °C abgekühlt und unter Einhaltung einer Temperatur von 50 bis 55 °C portionsweise mit 0,80 kg einer 30 gew.-%igen wässrigen Lösung von Formaldehyd (8 Mol) versetzt. Nach beendeter Zugabe gab man sofort 0,70 kg entionisiertes Wasser zum Reaktionsgemisch, heizte dieses auf 100 °C auf und ließ 5 Stunden unter weiterem Rühren bei dieser Temperatur nachreagieren. Danach kühlte man das Reaktionsgemisch auf ca. 65 °C ab und gab soviel einer 35 gew.%igen wässrigen Kalziumhydroxid-Aufschlämmung hinzu, bis ein pH-Wert von 8 erreicht war. Anschließend filtrierte man das wässrige Reaktionsgemisch über ein 200 µm-Sieb und erhielt dabei eine wässrige Lösung des Vergleichssprühhilfsmittels SV2 mit einem Feststoffgehalt von ca. 35 Gew.-%.

2.3 Vergleichssprühhilfsmittel SV3

Die Herstellung des Vergleichssprühhilfsmittels SV3 erfolgte analog Beispiel 1 der DE-A 19629526.
1,15 kg (12 Mol) Phenol wurden in einem Reaktionsgefäß unter Stickstoff bei 60 °C vorgelegt und unter Rühren und stetigem Kühlen mit 1,38 kg (13,8 Mol) 98 gew.-%iger Schwefelsäure derart versetzt, dass die Temperatur des Reaktionsgemisches stets unter 110 °C lag. Nach beendeter Zugabe ließ man das Reaktionsgemisch unter weiterem Rühren 3 Stunden bei einer Temperatur von 105 bis 110 °C nachreagieren. Anschließend wurde das Reaktionsgemisch auf 50 °C abgekühlt und unter Rühren und Einhaltung einer Reaktionsgemischtemperatur von 50 bis 55 °C portionsweise mit 0,84 kg (8,4 Mol) einer 30 gew.-%igen wässrigen Formaldehydlösung versetzt. Nach beendeter Formaldehydzugabe gab man sofort 0,75 kg entionisiertes Wasser hinzu, heizte das Reaktionsgemisch auf 100 °C auf und beließ es unter Rühren für 4 Stunden bei dieser Temperatur. Anschließend wurde das Reaktionsgemisch auf 60 °C abgekühlt und bei dieser Temperatur weitere 0,83 kg entionisiertes Wasser zugegeben. Danach wurde das Reaktionsgemisch unter weiterem Rühren auf 65 °C aufgeheizt und solange eine 35 gew.-%igen Aufschlämmung von Kalziumhydroxid in entionisiertem Wasser zugegeben, bis ein pH-Wert von 8 erreicht war. Das so erhaltene Reaktionsgemisch wurde auf Raumtemperatur abgekühlt und über ein 200 µm-Sieb filtriert. Der Feststoffgehalt der wässrigen Lösung von SV3 betrug ca. 35 Gew.-%.
Anschließend wurden die wässrigen Lösungen der Sprühhilfsmittel S1, SV2 und SV3 mit entionisiertem Wasser auf einen Feststoffgehalt von 20 Gew.-% verdünnt.

3. Sprühtrocknung

3.1 Antiblockmittel

Als hydrophobes Antiblockmittel wurde Sipernat® D 17 der Fa. Degussa eingesetzt. Hierbei handelt es sich um eine Fällungskieselsäure mit einer spezifischen Oberfläche (in Anlehnung an ISO 5794-1, Annex D) von 100 m$^2$/g, einer mittleren Teilchengröße (in Anlehnung an ASTM C 690-1992) von 7 $\mu$m und einer Stampfdichte (in Anlehnung an ISO 787-11) von 150 g/l, deren Oberfläche durch Behandlung mit speziellen Chlorsilanen hydrophobiert wurde.

3.2 Herstellung der sprühgetrockneten Polymerisatpulver

Die Sprühtrocknung erfolgte in einem Minor-Labortrockner der Ga. GEA Wiegand GmbH (Geschäftsbereich Niro) mit Zweistoffdüsenzerstäubung und Pulverabscheidung in einem Gewebefilter. Die Turmeingangstemperatur des Stickstoffs betrug 135 °C, die Ausgangstemperatur 75 °C. Pro Stunde wurden 2 kg einer Sprühspeise eindosiert.
Die Herstellung der Sprühspeise erfolgte dergestalt, dass auf 5 Gew.-Teile der auf 40 Gew.-% verdünnten wässrigen Polymerisatdispersionen D1 oder D2 1 Gew.-Teil der auf 20 Gew.-% verdünnten wässrigen Sprühhilfsmittellösungen S1, SV2 oder SV3 bei Raumtemperatur zugegeben und unter Rühren homogen vermischt wurden.
Gleichzeitig mit der Sprühspeise wurden kontinuierlich 2 Gew.-% des hydrophoben Antiblockmittels Sipernat® D 17, bezogen auf den Feststoffgehalt der Sprühspeise, über eine gewichtsgesteuerte Doppelschnecke in den Kopf des Sprühturms eindosiert.
Erfindungsgemäße Polymerisatpulver P1 und P2 wurden aus den wässrigen Polymerisatdispersionen D1 und D2 unter Verwendung von Sprühhilfsmittel S1 erhalten. Die Polymerisatpulver der Vergleichsbeispiele PV1 und PV2 wurden aus der wässrigen Polymeriastdispersion D1 unter Verwendung der Sprühhilfsmittel SV2 und SV3 erhalten. Die bei der Sprühtrocknung erhaltenen Pulverausbeuten sind in Tabelle 1 angegeben.

4. Beurteilung der sprühgetrockneten Polymerisatpulver

4.1 Redispergierverhalten

Jeweils 30 g der erhaltenen Polymerisatpulver wurden bei Raumtemperatur in einem Standzylinder mit 70 ml entionisiertem Wasser mittels eines Ultra Turrax-Gerätes bei 9500 Umdrehungen pro Minute homogen gemischt. Anschließend ließ man die erhaltenen wässrigen Polymerisatdispersionen für 4 Stunden bei Raumtemperatur ruhen und beurteilte danach visuell, wie stark sich die Polymerphasen in den wässrigen Phasen separiert hatten. War keinerlei Phasenseparierung zu beobachten, wurden die Redispergiereigenschaften als "gut" bewertet. Bei Phasenseparierung wurden die Redispergiereigenschaften als "schlecht" bewertet. Die Ergebnisse sind in Tabelle 1 zusammengefasst.

4.2 Visuelle Beurteilung der erhaltenen Polymerisatpulver

Die Farbe der erhaltenen Polymerisatpulver wurden visuell beurteilt. Die dabei erhaltenen Ergebnisse finden sich in Tabelle 1.

4.3 Vergilbungstest

Aus den erhaltenen Polymerisatpulvern wurden Polymerisatfilme hergestellt, indem ca. 60 g einer 10 gew.-%igen wässrigen Polymerisatdispersion (vorgenannte Polymerisatpulver mittels Ultra Turrax-Gerätes in Wasser dispergiert) in Kautschuk-Filmplatten der Größe 7x15 cm gegossen und diese 4 Tage bei Raumtemperatur getrocknet wurden. Anschließend wurden die ca. 2 mm dicken Filme aus den Kautschuk-Filmplatten herausgelöst und für 3 Monate dem Tageslicht im Labor ausgesetzt. Die Beurteilung der Filmvergilbung erfolgte nach dem Schulnotensystem, wobei "1" für keine bis sehr geringe Vergilbung und "6" für sehr starke Vergilbung steht. Die Ergebnisse der Beurteilung finden sich ebenfalls in Tabelle 1.

Tabelle 1: Beurteilung der sprühgetrockneten Polymerisatpulver

| Pulver | Dispersion | Sprühhilfsmittel | Ausbeute [Gew.-%] | Farbe | Redispergierbarkeit | Vergilbung des Films |
|---|---|---|---|---|---|---|
| P1 | D1 | S1 | 82 | weiß | gut | 1-2 |
| P2 | D2 | S1 | 83 | weiß | gut | 1-2 |

(fortgesetzt)

| Pulver | Dispersion | Sprühhilfsmittel | Ausbeute [Gew.-%] | Farbe | Redispergierbarkeit | Vergilbung des Films |
|--------|-----------|------------------|-------------------|-------|---------------------|----------------------|
| PV1 | D1 | SV2 | 84 | gelb | gut | 4 |
| PV2 | D1 | SV3 | 83 | braun | gut | 5 |

Wie aus den Ergebnissen klar ersichtlich ist, lassen sich die mit dem neuen erfindungsgemäßen Sprühhilfsmittel hergestellten Polymerisatpulver P1 und P2 in hohen Ausbeuten erhalten. Dabei weisen sie eine gute Redispergierbarkeit in Wasser auf. Im Vergleich zu den mit aus dem Stand der Technik bekannten Sprühhilfsmitteln hergestellten Polymerisatpulvern PV1 und PV2 weisen die erfindungsgemäß hergestellten Polymerisatpulver P1 und P2 keinerlei Verfärbungen auf. Auch weisen die erfindungsgemäß hergestellten Polymerisatpulver P1 und P2 eine deutlich geringere Vergilbungsneigung im Vergleich zu den nicht erfindungsgemäß hergestellten Polymerisatpulvern PV1 und PV2 auf.

**Patentansprüche**

1. Verfahren zur Herstellung eines gut in Wasser redispergierbaren Polymerisatpulvers durch Sprühtrocknung einer wässrigen Polymerisatdispersion, **dadurch gekennzeichnet, dass** die Sprühtrocknung der wässrigen Polymerisatdispersion in Anwesenheit eines Sprühhilfsmittels A erfolgt, welches durch Umsetzung eines Dihydroxydiphenylsulfons mit 0,5 bis 5 Mol eines aliphatischen Aldehyds mit 1 bis 6 C-Atomen und 0,4 bis 2 Mol Natriumsulfit pro Mol Dihydroxydiphenylsulfon bei einer Temperatur von 90 bis 180 °C erhalten wurde.

2. Verfahren nach Anspruch 1, **dadurch gekennzeichnet, dass** als Dihydroxydiphenylsulfon 4,4'-Dihydroxydiphenylsulfon oder ein dieses enthaltende Gemisch eingesetzt wird.

3. Verfahren nach einem der Ansprüche 1 oder 2, **dadurch gekennzeichnet, dass** die Umsetzung des Dihydroxydiphenylsulfons in wässriger Lösung unter Druck erfolgt.

4. Verfahren nach Anspruch 3, **dadurch gekennzeichnet, dass** die nach der Umsetzung erhaltene wässrige Lösung auf einen pH-Wert $\geq 7$ eingestellt wird.

5. Verfahren nach einem der Ansprüche 1 bis 4, **dadurch gekennzeichnet, dass** das Sprühhilfsmittel A im Gemisch mit wenigstens einem anderen Sprühhilfsmittel B eingesetzt wird.

6. Verfahren nach Anspruch 5, **dadurch gekennzeichnet, dass** die Gesamtmenge des Sprühhilfsmittels zu $\geq 50$ Gew.-% aus Sprühhilfsmittel A besteht.

7. Verfahren nach einem der Ansprüche 1 bis 6, **dadurch gekennzeichnet, dass** pro 100 Gew.-Teile Polymerisat 0,1 bis 40 Gew.-Teile Sprühhilfsmittel A eingesetzt werden.

8. Verfahren nach einem der Ansprüche 1 bis 7, **dadurch gekennzeichnet, dass** das Polymerisat

| | |
|---|---|
| 50 bis 99,9 Gew.-% | Ester der Acryl- und/oder Methacrylsäure mit 1 bis 12 C-Atome aufweisenden Alkanolen und/oder Styrol, oder |
| 50 bis 99,9 Gew.-% | Styrol und/oder Butadien, oder |
| 50 bis 99,9 Gew.-% | Vinylchlorid und/oder Vinylidenchlorid, oder |

| | |
|---|---|
| 40 bis 99,9 Gew.-% | Vinylacetat, Vinylpropionat und/oder Ethylen |

in einpolymerisierter Form enthält.

9. Verfahren nach einem der Ansprüche 1 bis 8, **dadurch gekennzeichnet, dass** das Polymerisat eine Glasübergangstemperatur von -60 bis +150 °C aufweist.

**10.** Verfahren nach einem der Ansprüche 1 bis 9, **dadurch gekennzeichnet, dass** zur Sprühtrocknung neben dem Sprühhilfsmittel A wenigstens ein Antiblockmittel eingesetzt wird.

**11.** Polymerisatpulver, erhältlich nach einem Verfahren gemäß einem der Ansprüche 1 bis 10.

**12.** Verwendung des Polymerisatpulvers gemäß Anspruch 11 als Bindemittel in Klebstoffen, Dichtmassen, Kunstharzputzen, Papierstreichmassen, Anstrichmitteln sowie sonstigen Beschichtungsmitteln oder als Additiv in mineralischen Bindemitteln.

**13.** Wässrige Polymerisatdispersion, erhältlich durch Redispergieren von Polymerisatpulver gemäß Anspruch 11 in wässrigem Medium.

**14.** Verwendung eines Umsetzungsproduktes, welches durch Umsetzung eines Dihydroxydiphenylsulfons mit 0,5 bis 5 Mol eines aliphatischen Aldehyds mit 1 bis 6 C-Atomen und 0,4 bis 2 Mol Natriumsulfit pro Mol Dihydroxydiphenylsulfon bei einer Temperatur von 90 bis 180 °C erhalten wurde, als Sprühhilfsmittel bei der Sprühtrocknung von wässrigen Polymerisatdispersionen.

**Claims**

**1.** A process for the preparation of a readily water-redispersible polymer powder by spray drying of an aqueous polymer dispersion, wherein the spray drying of the aqueous polymer dispersion is effected in the presence of a spray assistant A which was obtained by reacting a dihydroxydiphenyl sulfone with from 0.5 to 5 mol of an aliphatic aldehyde of 1 to 6 carbon atoms and from 0.4 to 2 mol of sodium sulfite per mole of dihydroxydiphenyl sulfone at from 90 to 180°C.

**2.** The process according to claim 1, wherein the dihydroxydiphenyl sulfone used is 4,4'-dihydroxydiphenyl sulfone or a mixture comprising it.

**3.** The process according to either of claims 1 and 2, wherein the reaction of the dihydroxydiphenyl sulfone is effected in aqueous solution under pressure.

**4.** The process according to claim 3, wherein the aqueous solution obtained after the reaction is brought to a pH of $\geq 7$.

**5.** The process according to any of claims 1 to 4, wherein the spray assistant A is used in the form of a mixture with at least one other spray assistant B.

**6.** The process according to claim 5, wherein the total amount of the spray assistant comprises $\geq 50\%$ by weight of spray assistant A.

**7.** The process according to any of claims 1 to 6, wherein from 0.1 to 40 parts by weight of spray assistant A are used per 100 parts by weight of polymer.

**8.** The process according to any of claims 1 to 7, wherein the polymer comprises

| | |
|---|---|
| from 50 to 99.9% by weight | of esters of acrylic and/or methacrylic acid with alkanols of 1 to 12 carbon atoms and/or styrene, or |
| from 50 to 99.9% by weight | of styrene and/or butadiene, or |
| from 50 to 99.9% by weight | of vinyl chloride and/or vinylidene chloride, or |
| from 40 to 99.9% by weight | of vinyl acetate, vinyl propionate and/or ethylene |

incorporated in the form of polymerized units.

**9.** The process according to any of claims 1 to 8, wherein the polymer has a glass transition temperature of from -60 to +150°C.

**10.** The process according to any of claims 1 to 9, wherein, in addition to the spray assistant A, at least one antiblocking agent is used for the spray drying.

**11.** A polymer powder obtainable by the process according to any of claims 1 to 10.

**12.** The use of a polymer powder according to claim 11 as a binder in adhesives, sealing compounds, synthetic resin renders, paper coating slips, surface coating compositions and other coating materials or as an additive in mineral binders.

**13.** An aqueous polymer dispersion obtainable by redispersing polymer powder according to claim 11 in an aqueous medium.

**14.** The use of a reaction product which was obtained by reacting a dihydroxydiphenyl sulfone with from 0.5 to 5 mol of an aliphatic aldehyde of 1 to 6 carbon atoms and from 0.4 to 2 mol of sodium sulfite per mole of dihydroxydiphenyl sulfone at from 90 to 180°C, as a spray assistant in the spray drying of aqueous polymer dispersions.

**Revendications**

**1.** Procédé de préparation d'une poudre de polymère bien redispersible dans l'eau par séchage par pulvérisation d'une dispersion aqueuse de polymère, **caractérisé en ce que** le séchage par pulvérisation de la dispersion aqueuse de polymère a lieu en présence d'un adjuvant de pulvérisation A qui a été obtenu par réaction d'une dihydroxydiphénylsulfone avec 0,5 à 5 moles d'un aldéhyde aliphatique comportant 1 à 6 atomes de C et 0,4 à 2 moles de sulfite de sodium par mole de dihydroxydiphénylsulfone, à une température de 90 à 180°C.

**2.** Procédé suivant la revendication 1, **caractérisé en ce que**, comme dihydroxydiphénylsulfone, on met en oeuvre de la 4,4'-dihydroxydiphénylsulfone ou un mélange contenant celle-ci.

**3.** Procédé suivant l'une des revendications 1 et 2, **caractérisé en ce que** la réaction de la dihydroxydiphénylsulfone a lieu en solution aqueuse, sous pression.

**4.** Procédé suivant la revendication 3, **caractérisé en ce que** la solution aqueuse obtenue après la réaction est ajustée à une valeur de pH $\geq$ 7.

**5.** Procédé suivant l'une des revendications 1 à 4, **caractérisé en ce que** l'adjuvant de pulvérisation A est mis en oeuvre en mélange avec au moins un autre adjuvant de pulvérisation B.

**6.** Procédé suivant la revendication 5, **caractérisé en ce que** la quantité totale de l'adjuvant de pulvérisation est constituée pour $\geq$ 50 % en poids de l'adjuvant de pulvérisation A.

**7.** Procédé suivant l'une des revendications 1 à 6, **caractérisé en ce que**, par 100 parties en poids de polymère, on met en oeuvre 0,1 à 40 parties en poids d'adjuvant de pulvérisation A.

**8.** Procédé suivant l'une des revendications 1 à 7, **caractérisé en ce que** le polymère contient, sous forme copolymérisée,

| | |
|---|---|
| 50 à 99,9 % | en poids d'ester de l'acide acrylique et/ou méthacrylique avec des alcanols présentant 1 à 12 atomes de C et/ou du styrène, ou |
| 50 à 99,9 % | en poids de styrène et/ou de butadiène, ou |
| 50 à 99,9 % | en poids de chlorure de vinyle et/ou de chlorure de vinylidène, ou |
| 40 à 99,9 % | en poids d'acétate de vinyle, de propionate de vinyle et/ou d'éthylène. |

**9.** Procédé suivant l'une des revendications 1 à 8, **caractérisé en ce que** le polymère présente une température de transition vitreuse de -60 à +150°C.

**10.** Procédé suivant l'une des revendications 1 à 9, **caractérisé en ce que**, pour le séchage par pulvérisation, on met en oeuvre au moins un agent antibloquant en plus de l'adjuvant de pulvérisation A.

**11.** Poudre de polymère que l'on peut obtenir suivant un procédé selon l'une des revendications 1 à 10.

**12.** Utilisation de la poudre de polymère suivant la revendication 11, comme liant dans des colles, des masses d'étanchéité, des enduits synthétiques, des masses d'enduction de papier, des agents de peinture ainsi que d'autres agents de revêtement, ou comme additif dans des liants minéraux.

**13.** Dispersion aqueuse de polymère que l'on peut obtenir par redispersion de la poudre de polymère suivant la revendication 11 dans un milieu aqueux.

**14.** Utilisation d'un produit de réaction qui a été obtenu par réaction d'une dihydroxydiphénylsulfone avec 0,5 à 5 moles d'un aldéhyde aliphatique comportant 1 à 6 atomes de C et 0,4 à 2 moles de sulfite de sodium par mole de dihydroxydiphénylsulfone, à une température de 90 à 180°C, comme adjuvant de pulvérisation lors du séchage par pulvérisation de dispersions aqueuses de polymère.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19629525 A
- DE 19629526 A
- DE 2214410 A
- DE 2445813 A
- EP 407889 A
- EP 784449 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- DE 10140551 A
- DE 2049114 A

- EP 78449 A
- DE 2238903 B
- EP 576844 A
- EP 62106 A
- EP 601518 A
- EP 680993 A
- EP 627450 A
- DE 3344242 A
- DE 19539460 A
- EP 671435 A
- EP 629650 A
- EP 467103 A
- DE 4406822 A
- EP 536597 A
- DE 493168 A
- DE 3342242 A
- DE 4118007 A
- DE 3101413 A

**In der Beschreibung aufgeführte Nicht-Patentliteratur**

- Encyclopedia of Polymer Science and Engineering. John Wiley & Sons, Inc, 1987, vol. 8, 659-677
- **D.C. BLACKLEY.** Emulsion Polymerisation. Applied Science Publishers, Ltd, 1975, 155-465
- **D.C. BLACKLEY.** Polymer Latices. Chapman & Hall, 1997, vol. 1, 33-415
- **H. WARSON.** The Applications of Synthetic Resin Emulsions. Ernest Benn, Ltd, 1972, 49-244
- **D. DIEDERICH.** Chemie in unserer Zeit. Verlag Chemie, 1990, vol. 24, 135-142
- **J. PIIRMA.** Emulsion Polymerisation. Academic Press, 1982, 1-287

- **F. HÖLSCHER.** Dispersionen synthetischer Hochpolymerer. Springer-Verlag, 1969, 1-160
- **G. KANIG.** *Kolloid-Zeitschrift & Zeitschrift für Polymere,* vol. 190, 1
- **T.G. FOX.** *Bull. Am. Phys. Soc.,* 1956, vol. II (1), 123
- *Ullmann's Encyclopädie der technischen Chemie,* vol. 19 (4), 18
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- *TIZ-Fachberichte,* 1985, vol. 109 (9), 698 ff